# EUROPEAN PATENT APPLICATION

(11) **EP 3 817 118 A1**
(43) Date of publication of application: **05.05.2021**
(21) Application number: 19878471.2
(22) Date of filing: 01.11.2019
(51) Int. Cl.: H01M 10/0562, H01M 10/0585, H01M 10/0525

(54) **METHOD FOR PRODUCING SOLID-STATE BATTERY**

(30) Priority: 02.11.2018 KR 20180133816
(71) Applicant: LG CHEM, LTD., Yeongdeungpo-gu, Seoul 07336 (KR)
(72) Inventor: AHN, Byoung-Hoon, Daejeon 34122 (KR); LEE, Sang-Kyun, Daejeon 34122 (KR); CHUNG, Hae-Kang, Daejeon 34122 (KR); CHOI, Baeck-Boem, Daejeon 34122 (KR); CHOY, Sang-Hoon, Daejeon 34122 (KR)
(74) Representative: Plasseraud IP
(86) International application number: PCT/KR2019/014758
(87) International publication number: WO 2020/091532

(57) **Abstract**

Provided is a method for manufacturing an all-solid-state battery which allows a solid electrolyte layer and an electrode to be in sufficiently close in contact with each other without deformation of the electrode shape or damages upon the electrode. The method for manufacturing an all-solid-state battery includes applying slurry for a solid electrolyte layer to the surface of an electrode active material layer to form a patterned solid electrolyte layer, and carrying out pressurization to form a solid electrolyte layer.

## Description

### TECHNICAL FIELD

The present application claims priority to Korean Patent Application No. 10-2018-0133816 filed on November 2, 2018 in the Republic of Korea. The present disclosure relates to a method for manufacturing an all-solid-state battery including a solid electrolyte layer, a positive electrode and a negative electrode and the solid electrolyte layer interposed between the positive electrode and the negative electrode, wherein the solid electrolyte layer includes an inorganic solid electrolyte having ion conductivity.

### BACKGROUND ART

A lithium ion battery using a liquid electrolyte has a structure in which a negative electrode and positive electrode are insulated by a separator, and thus may cause a short-circuit when the separator is damaged by deformation or external impact, resulting in a risk, such as ignition or explosion. Therefore, it can be said that development of a solid electrolyte capable of ensuring safety is a very important problem in the field of lithium ion secondary batteries.

A lithium secondary battery using a solid electrolyte is advantageous in that it has enhanced safety, prevents leakage of an electrolyte to improve the reliability of a battery, and facilitates manufacture of a thin battery. In addition, lithium metal may be used as a negative electrode to improve energy density. Thus, such a lithium secondary battery using a solid electrolyte has been expected to be applied to a high-capacity secondary battery for electric vehicles in addition to a compact secondary battery, and has been spotlighted as a next-generation battery.

However, a lithium secondary battery using a solid electrolyte has lower ion conductivity as compared to a battery using a liquid electrolyte and particularly shows degradation of output characteristics at low temperature. In addition, a solid electrolyte layer shows lower adhesion to an electrode, as compared to a liquid-state electrolyte, resulting in a problem of an increase in interfacial resistance. To solve the above-mentioned problem, a lamination process of pressurizing the electrode and the solid electrolyte layer by using heat and/or pressure is carried out in order to allow the electrode and the solid electrolyte layer to be in close contact with each other. However, when high pressure is applied for lamination, battery elements may be damaged (for example, electrode active material particles may be broken). In addition, when using a solid electrolyte material having high ductility for the solid electrolyte layer, the electrode may be oriented together with deformation of the solid electrolyte particles to cause deformation of the electrode shape. In this case, it is difficult to obtain the originally designed shape of the electrode. In addition, the electrode may be oriented excessively and thus may be torn. For these reasons, in the case of an electrode using a solid electrolyte, it cannot realize capacity sufficiently as compared to the capacity of an electrode in the presence of a liquid electrolyte, and thus provides capacity lower than the designed or theoretical capacity. Under these circumstances, there is a need for developing a novel method for manufacturing an all-solid-state battery which ensures sufficient adhesion between the electrode and the solid electrolyte layer, while preventing damages upon the electrode.

### DISCLOSURE

### Technical Problem

The present disclosure is designed to solve the problems of the related art, and therefore the present disclosure is directed to providing a method for manufacturing an all-solid-state battery which allows a solid electrolyte layer and an electrode to be in sufficiently close in contact with each other without deformation of the electrode shape or damages upon the electrode. These and other objects and advantages of the present disclosure may be understood from the following detailed description. Also, it will be easily understood that the objects and advantages of the present disclosure may be realized by the means shown in the appended claims and combinations thereof.

### Technical Solution

According to the first embodiment of the present disclosure, there is provided a method for manufacturing an electrode member for an all-solid-state battery having a solid electrolyte layer formed on the surface of an electrode, the method including the following steps (S1) to (S3):
(S1) preparing an electrode including a current collector and an electrode active material layer formed on the surface of the current collector;
(S2) applying slurry for forming a solid electrolyte layer to the surface of the electrode, followed by drying, to form a patterned solid electrolyte layer; and
(S3) carrying out lamination by pressurizing the product of step (S2) so that the surface of the electrode active material layer may be totally covered with the solid electrolyte layer,
wherein step (S2) is carried out in such a manner that the solid electrolyte may cover at least a part of the surface of the electrode active material layer, with the proviso that the solid electrolyte layer is patterned to have a non-coated portion that is not coated with the solid electrolyte.

According to the second embodiment of the present disclosure, there is provided the method for manufacturing an electrode member for an all-solid-state battery as defined in the first embodiment, which further includes a step of heating the product of step (S2), before step (S3).

According to the third embodiment of the present disclosure, there is provided the method for manufacturing an electrode member for an all-solid-state battery as defined in the second embodiment, wherein the heating is carried out at 60-150°C.

According to the fourth embodiment of the present disclosure, there is provided the method for manufacturing an electrode member for an all-solid-state battery as defined in any one of the first to the third embodiments, wherein the solid electrolyte layer includes a sulfide-based solid electrolyte represented by the following Chemical Formula 1:

[Chemical Formula 1] Lₐ₁M_{b1}P_{c1}S_{d1}Aₑ₁

Wherein L is at least one element selected from Li, Na and K, M is an element selected from B, Zn, Sn, Si, Cu, Ga, Sb, Al and Ge, A is at least one selected from I, Br, Cl and F, and each of al-el represents the compositional ratio of each element, wherein al:bl:cl:dl:el is 1-12:0-1:1:2-12:0-5.

According to the fifth embodiment of the present disclosure, there is provided the method for manufacturing an electrode member for an all-solid-state battery as defined in any one of the first to the fourth embodiments, wherein the patterned solid electrolyte layer has any one pattern selected from a stripe pattern, dot pattern, a pattern having multiple lines crossing one another like a checker board pattern, and a matrix pattern.

According to the sixth embodiment of the present disclosure, there is provided the method for manufacturing an electrode member for an all-solid-state battery as defined in any one of the first to the fifth embodiments, which further includes a step of aligning the stacked array of the electrode and the solid electrolyte layer, after step (S3).

According to the seventh embodiment of the present disclosure, there is provided the method for manufacturing an electrode member for an all-solid-state battery as defined in any one of the first to the sixth embodiments, wherein the pressurization is carried out by using a hot press.

According to the eighth embodiment of the present disclosure, there is provided the method for manufacturing an electrode member for an all-solid-state battery as defined in any one of the first to the seventh embodiments, wherein the pressurization is carried out by using a roll press through a continuous process.

According to the ninth embodiment of the present disclosure, there is provided a method for manufacturing an electrode assembly by using the electrode member obtained from the method as defined in any one of the first to the eighth embodiments, the method including: stacking and laminating a first electrode member with a second electrode member in such a manner that the solid electrolyte layers of the members may face each other, wherein each of the first electrode member and the second electrode member is an electrode member obtained from the method as defined in any one of the first to the eighth embodiments, and has polarity electrically opposite to each other.

According to the tenth embodiment of the present disclosure, there is provided the method for manufacturing an electrode assembly as defined in the ninth embodiment, wherein a second patterned electrolyte layer is formed on the surface of the solid electrolyte layer of the first electrode member, and the second electrode member is stacked on the first electrode member in such a manner that the second patterned electrolyte layer may face the solid electrolyte layer of the second electrode member, and lamination is carried out, wherein each of the first electrode member and the second electrode member is an electrode member obtained from the method as defined in any one of the first to the eighth embodiments, and has polarity electrically opposite to each other.

According to the eleventh embodiment of the present disclosure, there is provided an electrode assembly including a positive electrode, a negative electrode and a solid electrolyte layer interposed between the positive electrode and the negative electrode, and obtained by the method as defined the ninth or the tenth embodiment.

### Advantageous Effects

The method for manufacturing an all-solid-state battery according to the present disclosure gives the following effects. While carrying out lamination by pressurizing the solid electrolyte layer and the electrode, the electrode is not deformed even when the solid electrolyte particles having high ductility are deformed. In addition, the electrode active material is not damaged, thereby preventing degradation of battery performance.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating the method for manufacturing an all-solid-state battery according to the related art.
FIG. 2 is a photograph illustrating deformation occurring in the battery obtained by the method for manufacturing an all-solid-state battery according to the related art, and FIG. 3 is a schematic view of FIG. 2.
FIG. 4 to FIG. 6 show schematic views illustrating patterning of the solid electrolyte layer and the method for manufacturing an all-solid-state battery according to an embodiment of the present disclosure.
FIG. 7 is a flow chart of the method for manufacturing an all-solid-state battery according to an embodiment of the present disclosure, wherein the method includes an aligning step.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part ┌include(s), or comprise(s)┘ an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

The present disclosure relates to a method for manufacturing a secondary battery and a battery obtained thereby. The secondary battery may be a lithium ion secondary battery. In addition, according to the present disclosure, the lithium ion secondary battery may be an all-solid-state battery using a solid electrolyte.

According to the present disclosure, the all-solid-state battery includes a positive electrode, a negative electrode and a solid electrolyte layer interposed between the positive electrode and the negative electrode, wherein the solid electrolyte layer includes a sulfide-based solid electrolyte. According to an embodiment of the present disclosure, each of the positive electrode and the negative electrode independently includes an electrode active material and a solid electrolyte, wherein the solid electrolyte may include a sulfide-based solid electrolyte.

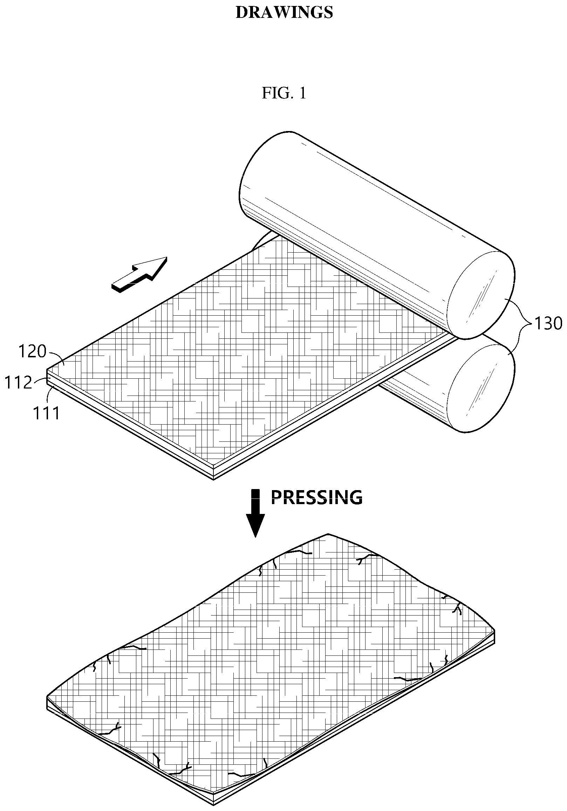

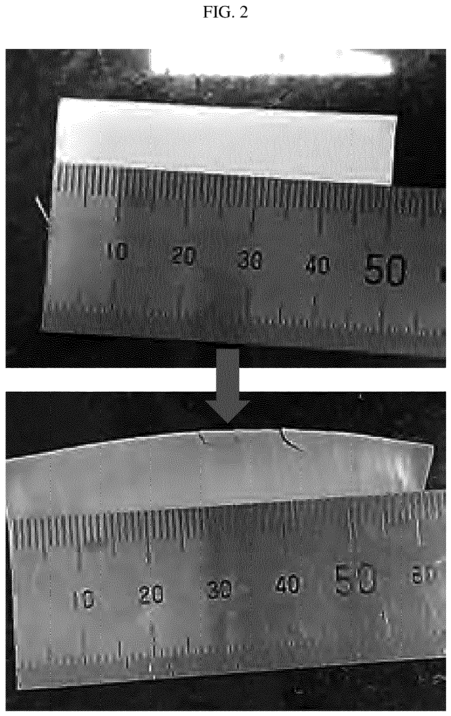

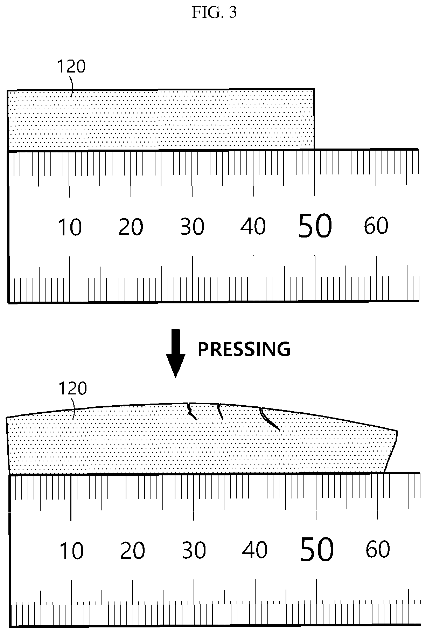

An all-solid-state battery performs charge/discharge by using ion conduction through an electrolyte layer interposed between a positive electrode and a negative electrode. Since the electrolyte layer uses an ion conductive material in a solid state, it shows low adhesion to an electrode to cause an increase in interfacial resistance undesirably. To solve the above-mentioned problem, a lamination process, wherein the electrode and solid electrolyte layer are pressurized by using heat and/or high pressure, is carried out after preparing the electrode and solid electrolyte layer. Otherwise, some attempts have been made to induce high adhesion between the electrode and solid electrolyte layer by applying slurry for a solid electrolyte to the surface of an electrode active material layer, followed by drying, to prepare an electrode member, and then pressing the electrode member. However, when pressing the solid electrolyte layer and electrode active material layer, there is a problem in that the electrode active material layer is damaged. FIG. 1 is a schematic view illustrating the method for manufacturing an all-solid-state battery according to the related art. As shown in FIG. 1, the solid electrolyte layer is formed in such a manner that the surface of the electrode active material layer is totally covered with the solid electrolyte material, and then a lamination process is carried out so that the electrode and solid electrolyte layer may be bound to each other. FIG. 2 and FIG. 3 are photographs illustrating the product of the method for manufacturing an all-solid-state battery according to the related art. It can be seen from FIG. 2 and FIG. 3 that the electrode is deformed from its original shape.

Thus, the present disclosure is directed to providing a method for manufacturing an all-solid-state battery which ensures sufficient adhesion between stacked battery elements, while preventing damages upon electrodes and electrode active material layers.

The method for manufacturing a battery according to the present disclosure includes applying slurry for a solid electrolyte layer to the surface of an electrode, particularly to the surface of an electrode active material layer, followed by drying, and then pressurizing the resultant product to obtain an electrode member having a solid electrolyte layer formed on the surface of the electrode. Herein, the solid electrolyte layer is formed to have a predetermined pattern before the pressurization. As used herein, the solid electrolyte layer before the pressurization is referred to as a preliminary solid electrolyte layer or patterned electrolyte layer. The preliminary solid electrolyte layer includes a non-coated portion in which the electrode active material layer is not covered with the solid electrolyte material. Then, the preliminary solid electrolyte layer is pressurized so that the patterned electrolyte layer may collapse and may be molded under pressure into a planar shape. As a result, the surface of the electrode active material layer is totally covered with the solid electrolyte layer.

According to the present disclosure, the electrode includes an electrode active material layer formed on at least one surface of an electrode current collector. The electrode may be a positive electrode or negative electrode. When the electrode is a positive electrode, it includes a positive electrode active material layer formed on at least one surface of a positive electrode current collector. When the electrode is a negative electrode, it includes a negative electrode active material layer formed on at least one surface of a negative electrode current collector.

When the electrode member is obtained from the above-described step, the electrode member may be laminated with an electrode having a polarity opposite to the polarity of the electrode member to obtain an electrode assembly. Otherwise, each of a positive electrode member and negative electrode member is prepared as described above, and then both electrode members may be laminated with each other to obtain an electrode assembly. In each case, the solid electrolyte layer is disposed in such a manner that it may be interposed between the positive electrode and negative electrode.

As used herein, the term 'lamination' refers to a process which includes allowing stacked battery elements to be in close contact with one another and binding them to one another, and is carried out under a predetermined pressure and/or temperature condition. The pressure may be applied by using various pressurization members, such as various pressing rollers or pressing jigs.

According to an embodiment of the present disclosure, the pressure or temperature is not limited to a particular range. For example, the lamination may be carried out under a pressure ranging from 80 MPa to 120 MPa. In addition, during the lamination process, the stacked structure may be heated to a temperature ranging from about 100°C to 150°C. Under the above-defined pressure and temperature conditions, it is possible to induce a sufficient level of adhesion between one layer and another layer, while preventing problems, such as orientation, breakage and detachment of an electrode or electrolyte layer.

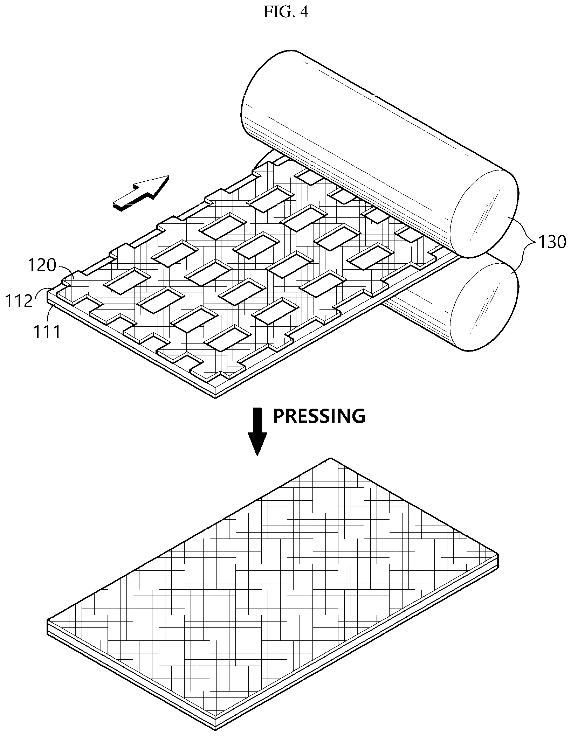

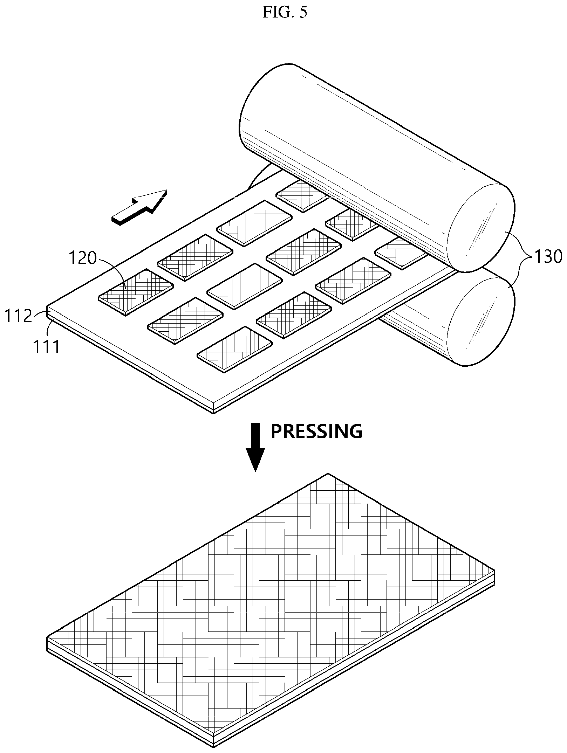

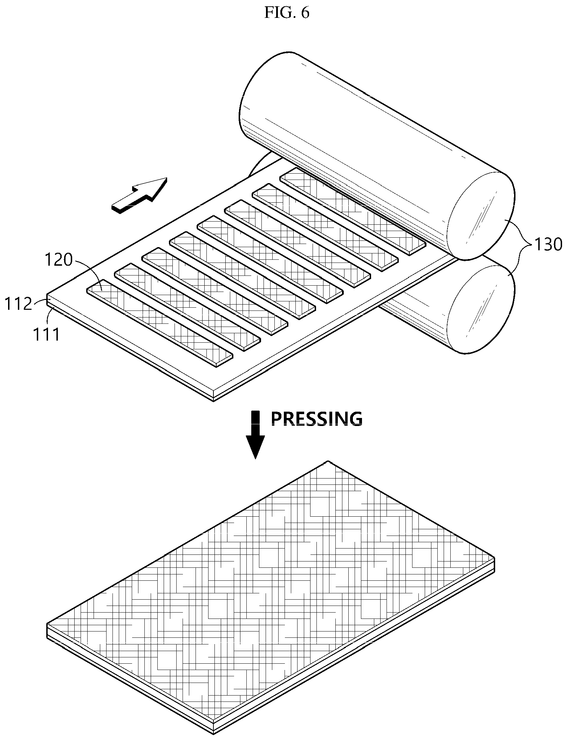

FIG. 4 to FIG. 7 show the method for manufacturing a battery according to an embodiment of the present disclosure. Hereinafter, the method for manufacturing a battery will be explained in more detail with reference to FIG. 4 to FIG. 7.

First, an electrode including a current collector and an electrode active material layer formed on the surface of the current collector is prepared (S1). To carry out step (S1), electrode slurry is prepared. The electrode slurry includes an electrode active material and a solid electrolyte, wherein the solid electrolyte may include a sulfide-based solid electrolyte. The ingredients are introduced to and dispersed in a suitable solvent to prepare slurry. The solvent is not particularly limited, but a nonpolar solvent showing low reactivity with the sulfide-based solid electrolyte, and having a significantly smaller dipole moment or having no dipole moment may be used. According to an embodiment of the present disclosure, the solvent may have a Snyder polarity index of 3 or less or a relative polarity of 0.2 or less. For example, the solvent may include an aromatic solvent, such as benzene, xylene, toluene, methoxybenzene or anisole, a linear aliphatic solvent, such as hexane, heptane, octane, nonane or decane, or a cycloaliphatic solvent, such as a saturated hydrocarbon solvent, including cycloheptane. In addition, each electrode slurry may include at least one selected from a conductive material and a binder resin. If necessary, the electrode slurry may further include an additive, such as an anti-oxidizing or anti-reducing agent.

According to an embodiment of the present disclosure, the slurry may include the electrode active material and solid electrolyte at a weight ratio of 60:40-90:10. Meanwhile, the slurry may further include a conductive material in an amount of 0.5-5 parts by weight, and a binder in an amount of 0.5-3 parts by weight, based on 100 parts by weight of the total slurry composition. The slurry may be obtained through a wet mixing process in which the ingredients are introduced to and mixed in a solvent. Herein, a mechanical mixing device, such as a PD mixer or paste mixer, may be used. The remaining ingredients, other than the solvent in the slurry, i.e. the solid content may have a concentration of 50-70 wt%.

Then, the prepared slurry is applied to an electrode current collector, followed by drying, to prepare an electrode. The slurry may be applied by using a suitable coating process, such as slot die coating, doctor blade coating, or the like. The slurry may be dried by using a method selected suitably from various methods, such as natural drying, hot air drying, cold air drying, air blowing drying or drying under heating. The drying method is not particularly limited and any method may be used, as long as it removes the solvent in the slurry to provide an electrode in a solidified state. The drying may be carried out at 60-120°C for 5-20 minutes. For example, the drying may be carried out under vacuum. If necessary, the electrodes may be pressurized at room temperature under a pressure of 80-400 MPa or may be hot pressed at a temperature of 60-120°C. According to an embodiment of the present disclosure, the electrode may be retained in a non-pressurized state, until the solid electrolyte layer is formed after drying. The term 'non-pressurized state' refers to a state in which the solvent is removed after applying slurry for forming each layer, the electrode maintains structural characteristics, such as thickness, size, area and porosity, in its solidified and dried state, and no artificial pressure is applied to the electrode from a pressurization member.

Then, slurry for forming a solid electrolyte layer is applied to and dried on the surface of the electrode active material layer to form a patterned electrolyte layer (S2). The slurry for forming a solid electrolyte layer may include a sulfide-based solid electrolyte and is prepared by introducing a solid electrolyte to a suitable solvent and dispersing it therein. The solvent is not particularly limited, but a nonpolar solvent showing low reactivity with the sulfide-based solid electrolyte, and having a significantly smaller dipole moment or having no dipole moment may be used. According to an embodiment of the present disclosure, the solvent may have a Snyder polarity index of 3 or less or a relative polarity of 0.2 or less. For example, the solvent may include an aromatic solvent, such as benzene, xylene, toluene, methoxybenzene or anisole, a linear aliphatic solvent, such as hexane, heptane, octane, nonane or decane, or a cycloaliphatic solvent, such as a saturated hydrocarbon solvent, including cycloheptane. In addition, if necessary, the slurry may further include a binder resin or an additive, such as anti-oxidizing or anti-reducing agent. The slurry for forming a solid electrolyte layer may be obtained by further introducing a binder to a nonpolar solvent, together with the solid electrolyte, in an amount of about 0-5 parts by weight based on 100 parts by weight of the solid electrolyte. The slurry may be mixed by using a mixing device, such as a PD mixer or paste mixer. The solid content of the slurry for forming a solid electrolyte layer may be about 40-70 wt% depending on the physical properties of the solid electrolyte and compositional ratio of the slurry. Once the slurry is prepared as described above, it is applied to the electrode active material layer. The slurry is applied in such a manner that a predetermined pattern may be realized. The pattern includes a non-coated portion that is not coated with the solid electrolyte material, while the solid electrolyte material covers at least a part of the surface of the electrode active material layer. Particularly, the pattern may have any one shape selected from a stripe pattern, dot pattern, a pattern having multiple lines crossing one another like a checker board pattern, and a matrix pattern. The pattern shape is not particularly limited. However, the pattern preferably has regular arrangement over the whole surface.

FIG. 4 to FIG. 6 are schematic views illustrating various patterns that may be realized on the solid electrolyte layer. According to an embodiment of the present disclosure, when pressurization is carried out through roll lamination, the pattern may have a shape of stripes perpendicular to the working direction (i.e. heading direction) of the roller.

The slurry may be applied through a suitable coating process, such as slot die coating, gravure coating or doctor blade coating. Next, the slurry is dried to obtain a patterned electrolyte layer. The slurry may be dried by a method selected suitably from various methods, such as natural drying, hot air drying, cold air drying, air blowing drying or drying under heating. However, the drying method is not particularly limited and any method may be used, as long as it removes the solvent from the slurry to provide a solidified preliminary solid electrolyte layer.

As described above, after drying the patterned electrolyte layer is retained in a non-pressurized state, until it is pressurized during the following lamination step.

Once the patterned electrolyte layer is formed on the surface of the electrode active material layer through the above-described steps, a lamination step is carried out to allow the patterned electrolyte layer to be in close contact with the electrode active material layer. While the electrolyte layer is pressurized through the lamination, an electrode member is obtained, wherein the surface of the electrode active material layer is totally covered with the solid electrolyte layer (S3). Herein, the lamination is carried out under a pressure of 100-400 MPa at room temperature (about 25°C) to 150°C. According to an embodiment of the present disclosure, the lamination step may be carried out for about 10-600 seconds. However, the pressurization time may be controlled in a suitable range, depending on the thickness of the electrode assembly and pressure and temperature applied to the electrode assembly.

While the patterned electrolyte layer collapses through the pressurization, the non-coated portion is filled with the solid electrolyte material so that the surface of the electrode active material layer may be totally covered with the solid electrolyte layer. According to an embodiment of the present disclosure, the lamination step may be carried out by using a method selected suitably from known pressing methods. For example, the lamination step may be carried out by using a hot press, or by using a roll press through a continuous process. Before carrying out the lamination step, the surface of the electrode member may be protected by covering it with a release film made of terephthalate.

Meanwhile, according to an embodiment of the present disclosure, a step of heating the product of step (S2) may be further carried out, after forming the patterned electrolyte layer and before carrying out step (S3). When the patterned electrolyte layer is heated in advance, it is possible to increase the ductility of the material, which is advantageous in that the non-coated portion is totally filled with the solid electrolyte material during the pressurization in step (S3). The heating step may be carried out at 60-150°C. When the heating temperature is lower than the above-defined range, the material has insufficient ductility and cannot facilitate deformation. When the heating temperature is higher than the above-defined range, the solid electrolyte may be decomposed to cause degradation of ion conductivity.

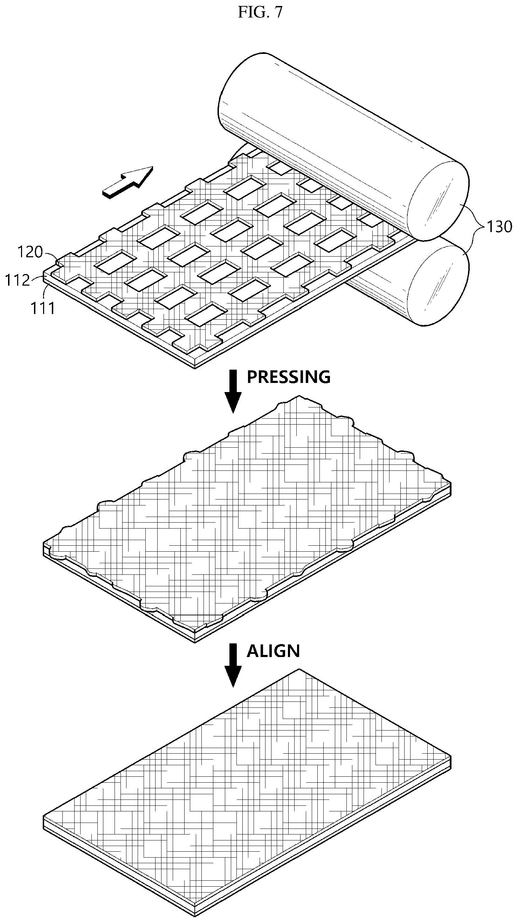

According to an embodiment of the present disclosure, after carrying out the lamination step, the outer circumferential portion of the solid electrolyte layer may not be aligned uniformly or may protrude out toward the outside of the electrode active material layer. Thus, after lamination, a step of aligning the electrode and solid electrolyte layer may be further carried out so that the stacked array of the electrode and solid electrolyte layer may not be misaligned. The alignment may be carried out through cutting using ultrasonic waves or laser, but is not limited to any particular method (see FIG. 7).

In another aspect of the present disclosure, there is provided an all-solid-state battery including the electrode member obtained by the above-described method, wherein the all-solid-state battery includes a positive electrode, a negative electrode and a solid electrolyte interposed between the positive electrode and the negative electrode. At least one of the positive electrode and the negative electrode may be the electrode member (i.e. negative electrode member and positive electrode member) obtained by the above-described method. When an electrode assembly is manufactured by using the electrode member, it is possible to avoid a need for preparing a solid electrolyte layer separately and interposing it between both electrodes, since the solid electrolyte layer contained in the electrode member substitutes for such a separate solid electrolyte layer. In other words, the negative electrode member having a solid electrolyte layer formed thereon according to the above-described method may be laminated with a separately prepared positive electrode, or the positive electrode member having a solid electrolyte layer formed thereon according to the above-described method may be laminated with a separately prepared negative electrode to obtain an all-solid-state battery. It is known to those skilled in the art that the battery elements are disposed in such a manner that the solid electrolyte layer may be interposed between the positive electrode and the negative electrode during the lamination.

For example, a negative electrode member and a positive electrode member may be manufactured by the above-described method, and then laminated with each other to obtain an all-solid-state battery. According to an embodiment of the present disclosure, a second patterned electrolyte layer may be further formed on the surface of solid electrolyte member of any one selected from the negative electrode member and the positive electrode member, and then the negative electrode member and the positive electrode member may be laminated with each other to obtain an all-solid-state battery. The second patterned electrolyte layer may be formed by the same method as the method for forming the patterned electrolyte layer during the manufacture of the electrode member. According to an embodiment of the present disclosure, slurry for forming a second solid electrolyte layer is applied to and dried on the surface of any one electrode member to form the second patterned electrolyte layer. Refer to the above description about preparation, application and drying of the slurry for forming a second solid electrolyte layer. Once the second patterned electrolyte layer is formed on the surface of the electrode member through the above-described steps, the other electrode member having the opposite polarity may be laminated with the electrode member to obtain an all-solid-state battery. Herein, the non-coated portion of the second patterned electrolyte layer is filled with the solid electrolyte material and the second patterned electrolyte layer is bound integrally and indivisibly to the solid electrolyte layers disposed at the upper/lower part thereof, thereby forming a single solid electrolyte layer. When the sold-state battery is manufactured by forming the second patterned solid electrolyte layer between the electrode members and carrying out lamination, it is possible to facilitate integral and indivisible binding between each electrode member and the solid electrolyte layer, and thus to improve the interfacial binding force and adhesion between one layer and another layer and to prevent degradation of ion conductivity. Meanwhile, the lamination step is carried out under a pressure of 100-400 Mpa at room temperature (about 25°C) to 150°C. According to an embodiment of the present disclosure, the lamination step may be carried out for about 10-600 seconds. However, the lamination time may be controlled in a suitable range, depending on the thickness of the electrode assembly, and pressure and temperature applied to the electrode assembly.

According to the present disclosure, the electrode includes a plurality of electrode active material particles and a solid electrolyte, wherein the solid electrolyte includes a sulfide-based solid electrolyte. In addition, the electrode may optionally further include at least one of a conductive material and a binder resin. In addition, the electrode may further include various additives in order to supplement or improve the physicochemical properties of the electrode. Meanwhile, according to an embodiment of the present disclosure, the solid electrolyte may further include at least one of an oxide-based solid electrolyte and a polymeric solid electrolyte.

According to the present disclosure, when the electrode is a negative electrode, the electrode active material may be any material used conventionally as a negative electrode active material for a lithium ion secondary battery. For example, the negative electrode active material may include at least one selected from: carbon such as non-graphitizable carbon, graphitic carbon, or the like; metal composite oxides such as LiₓFe₂O₃ (0 ≤ x ≤ 1), LiₓWO₂(0≤ x ≤ 1), SnₓMe₁₋ₓMe'_{y}O_{z} (Me: Mn, Fe, Pb or Ge; Me': Al, B, P, Si, an element of Group 1, Group 2 or Group 3 in the Periodic Table, or halogen; 0 < x ≤ 1; 1 ≤ y ≤ 3; 1 ≤ z ≤ 8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; conductive polymers such as polyacetylene; Li-Co-Ni based materials; titanium oxide; and lithium titanium oxide, or the like. According to an embodiment of the present disclosure, the negative electrode active material may include a carbonaceous material and/or Si.

When the electrode is a positive electrode, the electrode active material may be any material used conventionally as a positive electrode active material for a lithium ion secondary battery. Non-limiting examples of the positive electrode active material may include, but are not limited to: layered compounds such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M = Co, Ni, Fe, Cr, Zn or Ta, and x = 0.01-0.1) or Li₂Mn₃MO₈ (wherein M = Fe, Co, Ni, Cu or Zn); lithium manganese composite oxides having a spinel structure and represented by the formula of LiNiₓMn₂₋ₓO₄; LiMn₂O₄ in which Li is partially substituted with an alkaline earth metal ion; disulfide compounds; Fe₂(MoO₄)₃; or the like.

According to an embodiment of the present disclosure, the positive electrode active material and/or the negative electrode active material may have a particle diameter of about 0.01-50 µm, and may have a shape of secondary particles assembled by aggregation of a plurality of particles.

According to the present disclosure, the current collector includes a metal plate having electrical conductivity and may be one selected suitably depending on polarity of electrodes known in the field of secondary batteries. In addition, the current collector may have a thickness controlled within a range of approximately 1-50 µm.

According to the present disclosure, the conductive material is generally added to the electrode active material layer in an amount of 1-30 wt% based on 100 wt% of the mixture including the electrode active material. The conductive material is not particularly limited, as long as it causes no chemical change in the corresponding battery and has conductivity. For example, the conductive material include any one selected from: graphite, such as natural graphite or artificial graphite; carbon black, such as acetylene black, Ketjen black, channel black, furnace black, lamp black or thermal black; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives, or a mixture of two or more of them.

According to an embodiment of the present disclosure, the binder resin is not particularly limited, as long as it is an ingredient which assists binding of the ingredients of the electrode, such as the electrode active material or solid electrolyte, and binding of the ingredients to the current collector. Particular examples of the binder include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butyrene rubber, fluororubber, various copolymers, or the like. In general, the binder resin may be used in an amount of 1-30 wt%, or 1-10 wt%, based on 100 wt% of electrode active material layer.

Meanwhile, according to an embodiment of the present disclosure, the electrode active material layer may further include an additive, if necessary, and the additive may include at least one of an oxidation stabilizing additive, reduction stabilizing additive, flame retardant, heat stabilizer, anti-fogging agent, or the like.

According to the present disclosure, the solid electrolyte membrane is interposed between the negative electrode and the positive electrode and functions to allow lithium ions to pass therethrough, while electrically insulating the negative electrode and the positive electrode from each other. The solid electrolyte membrane includes a sulfide-based solid electrolyte. If necessary, the solid electrolyte membrane may further include at least one selected from a polymeric solid electrolyte and oxide-based solid electrolyte. In addition, the solid electrolyte layer may further include a binder resin, if necessary.

According to the present disclosure, the sulfide-based solid electrolyte contains sulfur (S), has conductivity of metal ions that belong to Group 1 or Group 2 in the Periodic Table, and preferably has electron insulation property. For example, the sulfide-based solid electrolyte may include a lithium ion conductive inorganic solid electrolyte satisfying the composition represented by the following Chemical Formula 1:

[Chemical Formula 1] Lₐ₁M_{b1}P_{c1}S_{d1}Aₑ₁

Wherein L is at least one element selected from Li, Na and K, preferably Li. M is an element selected from B, Zn, Sn, Si, Cu, Ga, Sb, Al and Ge. Particularly, M is preferably B, Sn, Si, Al or Ge, and more preferably Sn, Al or Ge. A is at least one selected from I, Br, Cl and F, preferably I or Br, and more preferably I. Each of al-el represents the compositional ratio of each element wherein al:bl:cl:dl:el is 1-12:0-1:1:2-12:0-5. Preferably, a1 is 1-9, more preferably 1.5-4. Preferably b1 is 0-0.5. Preferably, d1 is 3-7, more preferably 3.25-4.5. In addition, e1 is preferably 0-3, more preferably 0-1.

In Chemical formula 1, the compositional ratio of L, M, P, S and A preferably satisfies that b1 and e1 represent 0, preferably b1 = 0 and e1 = 0, and the ratio of a1:c1:d1 is 1-9:1:3-7, and more preferably b1 = 0 and e1 = 0, and the ratio of a1:c1:d1 is 1.5-4:1:3.25-4.5. The ratio of each element may be controlled by adjusting the amount of a starting compound when preparing the sulfide-based solid electrolyte.

The sulfide-based solid electrolyte may be non-crystalline (glass) or crystalline (glass ceramic), and may be crystallized partially.

In Li-P-S type glass and Li-P-S type glass ceramic, the molar ratio of Li₂S:P₂S₅ is preferably 65:35-85:15, and more preferably 68:32-75:25. When the ratio of Li₂S:P₂S₅ satisfies the above-defined range, it is possible to improve lithium ion conductivity. Particularly, it is possible to improve lithium ion conductivity to 1×10⁻⁵ S/cm or more, and more preferably to 1×10⁻⁴ S/cm or more, and more preferably to 1×10⁻³ S/cm or more. The upper limit of lithium ion conductivity is not particularly limited, but it is practically 1×10⁻¹ S/cm or less.

Particular examples of the sulfide-based solid electrolyte may include those formed by using a starting composition containing Li₂S and sulfide of an element that belongs to Group 13-Group 15 in the Periodic Table. Particularly, the sulfide-based solid electrolyte may include Li₂S-P₂S₅, Li₂S-LiI- P₂S₅, Li₂S-LiI-Li₂O- P₂S₅, Li₂S-LiBr-P₂S₅, Li₂S-Li₂O- P₂S₅, Li₂S -Li₃PO₄ - P₂S₅, Li₂S - P₂S₅-P₂O₅, Li₂S- P₂S₅-SiS₂, Li₂S- P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S -GeS₂ - P₂S₅, Li₂S -GeS₂ -Sb₂S₅, Li₂S -GeS₂ -Al₂S₃, Li₂S -SiS₂, Li₂S - Al₂S₃, Li₂S -SiS₂ -Al₂S₃, Li₂S -SiS₂ -P₂S₅, Li₂S -SiS₂ -P₂S₅ -LiI, Li₂S -SiS₂ -LiI, Li₂S -SiS₂ -Li₄ SiO₄, Li₂S-SiS₂ - Li₃PO₄, Li₁₀GeP₂S₁₂, or the like. More particularly, crystalline and/or amorphous starting compositions including Li₂S-P₂S₅, Li₂S-GeS₂ -Ga₂S₃, Li₂S-LiI- P₂S₅, Li₂S-LiI-Li₂O- P₂S₅, Li₂S-SiS₂ - P₂S₅, Li₂S-SiS₂ -Li₄SiO₄, Li₂S-SiS₂ -Li₃PO₄, Li₂S-Li₃ PO₄ -P₂S₅, Li₂S-GeS₂-P₂S₅, or Li₁₀GeP₂S₁₂ are preferred by virtue of high lithium ion conductivity. Methods for preparing the sulfide-based solid electrolyte material from the above-mentioned starting composition may be exemplified by an amorphization process. For example, the amorphization process may include a mechanical milling process and melt quenching process. Particularly, the mechanical milling process is preferred. This is because the mechanical milling process allows room-temperature processing to facilitate simplification of the preparation process.

In still another aspect, there are provided a battery module including the secondary battery as a unit cell, a battery pack including the battery module, and a device including the battery pack as a power source.

Herein, particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Description of Drawing Numerals]

111: Current collector
112: Electrode active material layer
120: Solid electrolyte layer
130: Pressurization member

## Claims

1. A method for manufacturing an electrode member for an all-solid-state battery having a solid electrolyte layer formed on the surface of an electrode, the method comprising the following steps (S1) to (S3):
(S1) preparing an electrode comprising a current collector and an electrode active material layer formed on the surface of the current collector;
(S2) applying slurry for forming a solid electrolyte layer to the surface of the electrode, followed by drying, to form a patterned solid electrolyte layer; and
(S3) carrying out lamination by pressurizing the product of step (S2) so that the surface of the electrode active material layer may be totally covered with the solid electrolyte layer,
wherein step (S2) is carried out in such a manner that the solid electrolyte may cover at least a part of the surface of the electrode active material layer, with the proviso that the solid electrolyte layer is patterned to have a non-coated portion that is not coated with the solid electrolyte.

2. The method for manufacturing an electrode member for an all-solid-state battery according to claim 1, which further comprises a step of heating the product of step (S2), before step (S3).

3. The method for manufacturing an electrode member for an all-solid-state battery according to claim 2, wherein the heating is carried out at 60-150°C.

4. The method for manufacturing an electrode member for an all-solid-state battery according to claim 1, wherein the solid electrolyte layer comprises a sulfide-based solid electrolyte represented by the following Chemical Formula 1:
[Chemical Formula 1] Lₐ₁M_{b1}P_{c1}S_{d1}Aₑ₁
Wherein L is at least one element selected from Li, Na and K, M is an element selected from B, Zn, Sn, Si, Cu, Ga, Sb, Al and Ge, A is at least one selected from I, Br, Cl and F, and each of al-el represents the compositional ratio of each element wherein al:bl:cl:dl:el is 1-12:0-1:1:2-12:0-5.

5. The method for manufacturing an electrode member for an all-solid-state battery according to claim 1, wherein the patterned solid electrolyte layer has any one pattern selected from a stripe pattern, dot pattern, a pattern having multiple lines crossing one another like a checker board pattern, and a matrix pattern.

6. The method for manufacturing an electrode member for an all-solid-state battery according to claim 1, which further comprises a step of aligning the stacked array of the electrode and the solid electrolyte layer, after step (S3).

7. The method for manufacturing an electrode member for an all-solid-state battery according to claim 1, wherein the pressurization is carried out by using a hot press.

8. The method for manufacturing an electrode member for an all-solid-state battery according to claim 1, wherein the pressurization is carried out by using a roll press through a continuous process.

9. A method for manufacturing an electrode assembly comprising: stacking and laminating a first electrode member with a second electrode member in such a manner that the solid electrolyte layers of the members may face each other, wherein each of the first electrode member and the second electrode member is independently an electrode member obtained from the method as defined in claim 1 and has polarity electrically opposite to each other.

10. The method for manufacturing an electrode assembly according to claim 9, wherein a second patterned electrolyte layer is formed on the surface of the solid electrolyte layer of the first electrode member, the second electrode member is stacked on the first electrode member in such a manner that the second patterned electrolyte layer may face the solid electrolyte layer of the second electrode member, and lamination is carried out, wherein each of the first electrode member and the second electrode member is an electrode member obtained from the method as defined in claim 1 and has polarity electrically opposite to each other.

11. An electrode assembly comprising a positive electrode, a negative electrode and a solid electrolyte layer interposed between the positive electrode and the negative electrode, and obtained by the method as defined in claim 9 or 10.
